Europäisches Patentamt

European Patent Office

Office européen des brevets

(19)

(11) Numéro de publication: **0 070 228**
**B1**

(12) **FASCICULE DE BREVET EUROPEEN**

(45) Date de publication du fascicule du brevet: **30.04.86**

(51) Int. Cl.⁴: **A 47 J 27/18**

(21) Numéro de dépôt: **82401258.7**

(22) Date de dépôt: **05.07.82**

(54) **Procédé de cuisson de jambons.**

(30) Priorité: **08.07.81 FR 8113922**

(43) Date de publication de la demande:
**19.01.83 Bulletin 83/03**

(45) Mention de la délivrance du brevet:
**30.04.86 Bulletin 86/18**

(84) Etats contractants désignés:
**AT BE CH DE FR GB IT LI LU NL SE**

(56) Documents cités:
**DE-C- 209 427**
**FR-A-2 257 235**
**FR-A-2 288 481**
**FR-A-2 296 393**
**FR-A-2 424 706**
**GB-A-1 059 841**
**US-A-4 058 635**
**US-A-4 270 598**

(73) Titulaire: **ARMOR-INOX**
**Route de Dinan Boîte Postale 16**
**F-56430 Mauron (FR)**

(72) Inventeur: **Dreano, Claude**
**Route de Perhan**
**F-56430 Mauron (FR)**

(74) Mandataire: **Le Guen, Louis François**
**Cabinet Louis Le Guen 1, avenue Edouard VII**
**B.P. 91**
**F-35802 Dinard Cédex (FR)**

Courier Press, Leamington Spa, England.

EP 0 070 228 B1

## Description

La présente invention concerne un procédé de cuisson jambons.

Dans la description qui va suivre, on considèrera plus platiculièrement la cuisson de jambons, mais il faut bien comprendre que le procédé de l'invention peut avoir d'autres applications, en particulier dans la salaisonnerie.

Actuellement (voir le FR—A—2 424 706), la cuisson des jambons s'effectue dans des enceintes fermées qui sont remplies d'eau ou de vapeur. A l'intérieur des enceintes, les jambons sont soit dans des moules empilés les uns sur les autres, soit entourés de tissus ou torchons et sont alors disposés en nappes séparées par des clayettes. Les moules sont généralement en fonte d'aluminium.

Dans les entreprises de salaisonnerie d'une certaine importance, plusieurs enceintes sont nécessaires pour la cuisson de toute la production journalière de jambons. Les jambons dans leurs moules ou leurs torchous sont alors rangés dans les enceintes chaque soir, puis les enceintes sont remplies d'eau et la cuisson se déroule pendant seize heures environ en suivant un programme de température préétabli. Au matin, l'eau chaude des enceintes est vidée à l'égout, ce que représente une perte énergétique relativement grande. Par ailleurs, l'eau de cuisson est évidemment grasse, ce qui tend à polluer et même à boucher les égouts.

Par ailleurs, une fois les jambons cuits, on les laisse refroidir naturellement avant de les stocker en chambre froide. Le refroidissement naturel, même dans une salle bien aérée, demande beaucoup de temps, de 12 à 24 heures, ce qui se traduit par une occupation au sol importante. On a bien tenté de réduire le temps de refroidissement en aspergeant les jambons à l'eau froide, mais par la même occasion on les délave.

Un objet de la présente invention consiste à prévoir un procédé de cuisson permettant de réduire la quantité d'eau rejetée après cuisson.

Un autre objet de l'invention consiste à prévoir un procédé de cuisson permettant d'améliorer la courbe de montée en température dans les jambons.

Un autre objet de l'invention consiste à prévoir un procédé de cuisson qui peut également être utilisé pour refroidir rapidement les jambons.

Les objets de l'invention mentionnés ci-dessus sont atteints par la mise en oeuvre des procédés définis dans les revendications 1 à 5, des installations mettant en oeuvre ces procédés étant décrites dans la description qui va suivre.

Un premier avantage de l'invention est qu'avec la quantité d'eau nécessaire à chauffer une enceinte de cuisson, on a chauffé plusieurs enceintes de cuisson. Il y a donc autant moins d'eau à rejeter à l'égout.

Un second avantage résulte du fait qui l'eau initiale se charge successivement en matières protéïques, nitrites, aromes, etc., au point de devenir un véritable bouillon. Il est vrai que, dans les cuissons déjà connues, l'eau se charge également ment de ces produits, mais, comme avec le procédé de l'invention, on utilise pour $k$ enceintes, pratiquement $k$ fois moins d'eau, le bouillon obtenu est $k$ fois plus concentré. Or la richesse du bouillon en matières protéïniques, nitrites, etc., est reconnue—voir l'ouvrage intitulé "La Charcuteri Crue" et les produits saumurés" par M. Migaud et J. C. Frentz, pages 463 et 464—comme améliorant la qualité gustative du produit et accroissant sa valeur nutritive. Par ailleurs, cette concentration en produits naturels évite d'avoir à ajouter des ingrédients supplémentaires. L'expérience a aussi montré que la coloration des jambons obtenus était plus soutenue.

Un troisième avantage tient à ce que l'eau ou le bouillon, qui vient en contact avec le jambon, à travers certains orifices et les interstices entre le moule et son couvercle, délavent moins le jambon puisqu'il y a présence d'eau moins de temps. On a donc un rendement pondéral meilleur, ce qui a été confirmé par l'expérience. On a constaté aussi que la tenue de tranche était meilleure.

Un autre avantage résulte de la moindre quantité d'eau à chauffer ou à maintenir chaude entre deux distributions d'eau à des enceintes de cuisson.

Bien entendu, à la suite d'expérimentations, on peut déterminer, d'une manière précise, quelle quantité de calories, il faut apporter à chaque cycle dans une enceinte, en tenant compte du poids du jambon et du nombre de moules que l'on a introduit dans l'enceinte. Il est alors possible de prévoir un circuit de commande comportant un microprocesseur dans les mémoire duquel on peut afficher ces données de poids et de nombre de moules ce qui permet d'affiner les différentes parties des cycles de chauffage.

Un autre avantage résulte du fait qu'une seule régulation de température est nécessaire pour la cuve 2, les autres enceintes 1.1 à 1.n pouvant en être dépourvues et dont être très simples. Le coût de l'installation s'en trouve réduit.

Les objets, avantages et caractéristiques de l'invention apparaîtront plus clairement à la lecture de la description suivante d'exemples de réalisation, ladite description étant faite en relation avec les dessins joints, parmi lesquels:

la Fig. 1 est une schéma d'une installation de cuisson et de refroidissement suivant l'invention,

la Fig. 2 est une vue en coupe illustrant de fonctionnement de l'installation de la Fig. 1,

la Fig. 3 est un schèma d'une variante de l'installation de la Fig. 1,

la Fig. 4 est une vue schématique en perspective d'une variante de l'installation de la Fig. 3, et

la Fig. 5 est une vue schématique en coupe illustrant un aspect du fonctionnement d'une cuve d'une installation suivant l'invention.

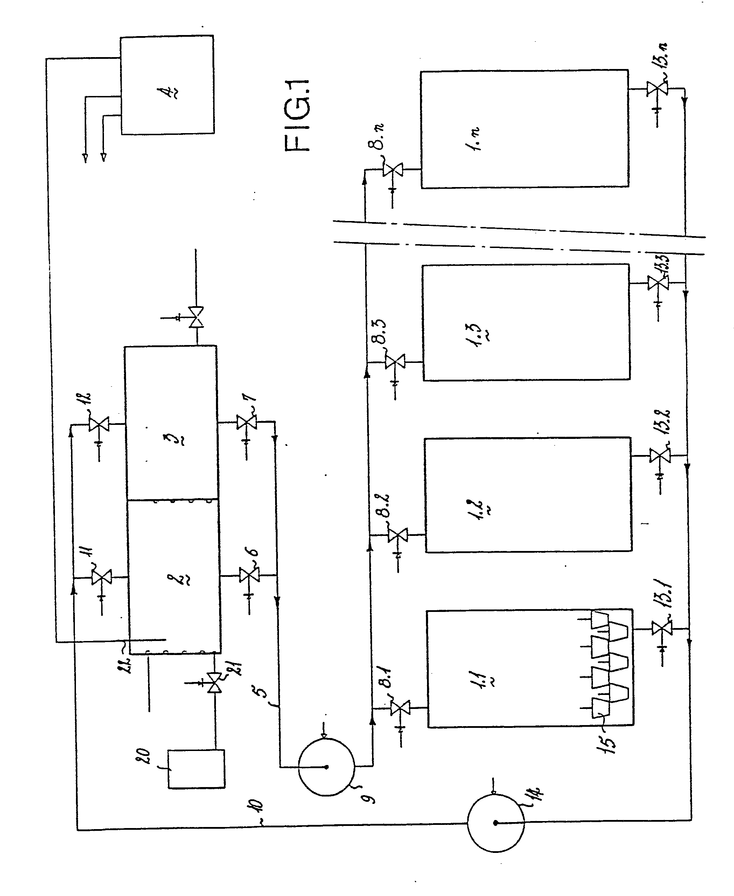

L'installation de la Fig. 1 comprend une série d'enceinte 1.1 à 1.n, une centrale de chauffe 2, une centrale de réfrigération 3, un circuit de commande 4 et un ensemble de conduite, de vannes et de pompes qui sera décrit plus en détail ci-après.

Une conduite aller 5 est reliés en parallèle, d'une part, aux centrales 2 et 3 par des vannes de sortie 6 et 7, d'autre part, aux enceintes 1.1 à 1.n par des vannes d'entrée 8.1 à 8.n. De plus, sur la conduite 5 est montée une pompe 9 aspirant le fluide sortant de la vanne 6 ou 7 pour le refouler vers les vannes 8.1 à 8.n.

Une conduite retour 10 est reliés en parallèle, d'une part, aux centrales 2 et 3 par des vannes d'entrée 11 et 12, et, d'autre part, aux enceintes 1.1 à 1.n par des vannes de sortie 13.1 à 13.n. De plus, sur la conduite 10 est montée une pompe 14 aspirant le fluide sortant d'une des vannes 13.1 à 13.n pour le refouler vers les vannes 11 et 12.

L'enceinte 1.1 a une paroi calorifugée le mieux possible pour réduire les pertes vers l'extérieur. Elle contient, dans l'exemple monté, un empilage de moules 15 remplis de jambons. Chaque moule est, par exemple, en fonte d'aluminium et recouvert d'un couvercle 16 également en fonte d'aluminium. On sait que beaucoup de moules à jambon sont déjà en aluminium. Toutefois, dans le procédé de l'invention, les propriétés de ce matériau sont très intéressantes. En effet, il s'agit d'un matériau bon conducteur de la chaleur. Les moules ont une épaisseur de l'ordre de 5 à 6 mm si bien que, compte tenu de la bonne chaleur spécifique de l'aluminium, ils sont capables d'emmagasiner rapidement une quantité de chaleur importante.

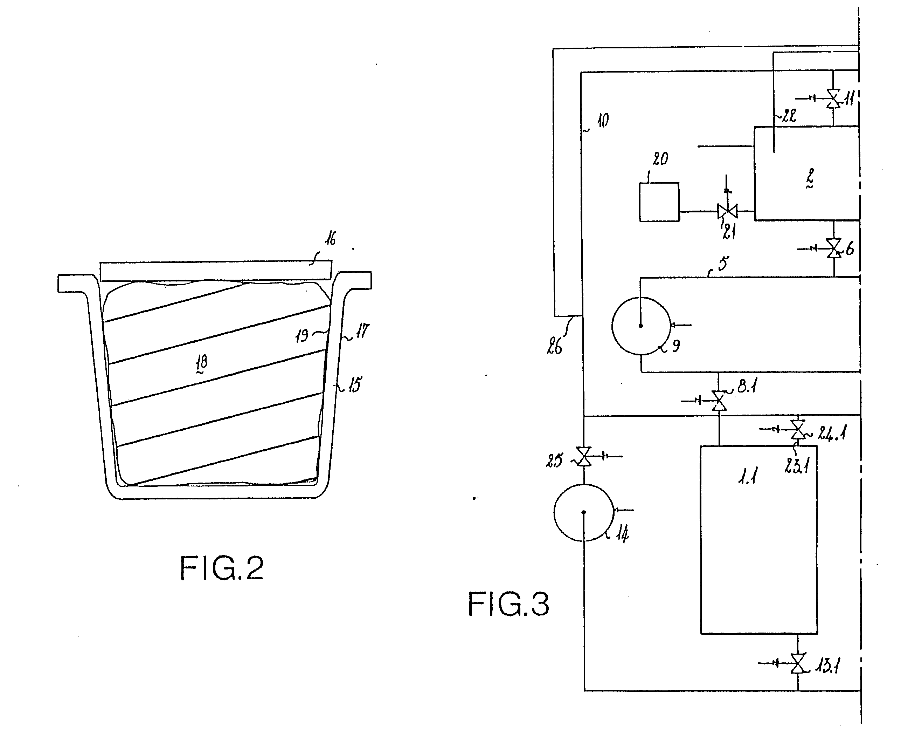

Le moule 15, qui dans la suite se comprend couvercle 16 inclus, montré en coupe à la Fig. 2, accumule rapidement de la chaleur quand sa surface extérieure 17 est en contact avec de l'eau chaude. Par contre, la masse 18 de jambon, située à l'intérieure du moule a un coefficient de conductibilité thermique relativement faible si bien que, par sa surface interne 19, le moule cède lentement sa chaleur au jambon. Comme on l'a mentionné plus haut, dans le procédé suivant l'invention, on introduit de l'eau chaude à 80°C, par exemple, dans l'enceinte 1 et on laisse l'eau dans l'enceinte pendant par exemple 15 minutes. Avant la fin de cette durée, le moule 15 a déjà pris la température de l'eau. Une fois l'eau évacuée de l'enceintre 1.1. Le moule 15, bien entendu avec son couvercle 16, ne perd pratiquement pas de chaleur vers l'extérieur par la surface 17, mais par contre va céder lentement de la chaleur au jambon. Puis on répète ce cycle un certain nombre de fois jusqu'à ce que la température du centre du jambon atteigne 67° à 69°C.

La centrale de chauffe 2 est une enceinte d'une contenance au moins égale à celle d'une enceinte 1.1 à 1.n. Elle est chauffée à partir d'une source d'eau ou de vapeur chaude 20 dont la sortie est reliée, par une vanne 21 à un serpentin de chauffage classique qui chauffe les parois de la centrale 2. L'échangeur de chaleur constitué par le serpentin et la paroi de la centrale 2 est tel qu'en ouvrant la vanne 21, la température de l'eau à l'intérieur de 2 augmente d'une vingtaine de degrés en deux ou trois minutes. La centrale 2 comporte une sonde de température 22 reliée à une entrée du circuit de commande 4, qui comprend un circuit de régulation fermant la vanne 21 quand la température à l'intérieur de 2 a atteint une température prédéterminée, par exemple 85°C. Au lien d'un chauffage par source d'eau chaude ou de vapeur chaude, la centrale de chauffe 2 peut aussi être munie d'un chauffage par résistance électrique.

Au début d'une opération de cuisson dans les enceintes 1.1 à 1.n, le circuit 4 ouvre la vanne 21. Puis quand la température de 85° C est atteinte dans 2, le circuit 4 ferme la vanne 21, déclenche le fonctionnement de la pompe 9, et ouvre les vannes 6 et 8.1. L'eau chaude passe de 2 dans 1.1, puis le circuit 4 arrête la pompe 9 et ferme les vannes 6 et 8.1. Quinze minutes plus tard, le circuit de commande 4 déclenche la pompe 14 et ouvre les vannes 13.1 et 11. L'eau un peu refroidie dans 1.1 repasse dans 2 et le circuit 4 arrête la pompe 14 et ferme les vannes 1.1 et 11. Le circuit 4 ouvre à nouveau la vanne 21 pour réchauffer l'eau revenue dans 2.

A nouveau quand la température de l'eau dans 2 atteint 85°, le circuit 4 ferme la vanne 21, puis déclenche la pompe 9 et ouvre les vannes 6 et 8.2. L'eau réchauffée passe de 2 dans l'enceinte 1.2. Le circuit 4 arrête alors la pompe 9 et ferme les vannes 6 et 8.2. Après quinze minutes, il déclenche la pompe 14 et ouvre les vannes 13.2 et 11. L'eau repasse de 1.2 dans 2. La pompe 14 et les vannes 13.2 et 11 sont fermées, la vanne 21 est réouverte pour le réchauffage de l'eau dans 2.

Des opérations similaires à celles qui viennent d'être décrites permettant, sous la commande de 4, de chauffer successivement les enceintes suivants 1.3 à 1.n. Si l'intervalle de temps entre le retrait de l'eau d'une enceinte et la prochaine admission est de quatre heures et si le temps pendant lequel l'eau chaude réside dans une enceinte est de quinze minutes, le nombre *n* d'enceintes peut, compte tenu du délai de deux à trois minutes pour le réchauffage dans 2, être égal à 12.

Dans l'installation montrée à la Fig. 3, qui est une variante de celle de la Fig. 1, les sorties de trop-plein 23.1 à 23.n sont reliées en parallèle à la conduite retour 10 en aval de la pompe 14, mais en amont de la vanne 11. En fait chaque branche parallèle est munie d'une vanne 24.1 à 24.n. Entre le point de raccordement entre les branches des sorties de trop-plein 23.1 à 23.n et la conduite 10, d'une part, et la pompe 14, d'autre part est montée une vanne 25. De plus, une sonde de température 25 est montée sur la conduite 10. Le fonctionnement de l'installation de la Fig. 3 est tel qu'au début d'un cycle de chauffe d'une enceinte, telle que 1.1, la vanne 6 est ouverte, la pompe 9 fonctionne, la vanne 8.1 est ouverte, la vanne 24.1 est ouverte, ainsi que la vanne 11. Par contre, toutes les vannes associées aux enceintes 1.2 à 1.n sont fermées, ainsi que la vanne 25. Donc, le liquide chaud est envoyé de 2 dans 1.1, où il se refroidit tout en remplissant l'enceinte 1.1. Une fois celle-ci pleine, la pompe 9 continue à fonctionner si bien que l'eau déjà refroidie s'écoule par le trop-plein 23.1, la vanne 24.1, la conduite 10 et la vanne 11 vers la cuve 2, où elle est à nouveau réchauffée. La pompe 9 continue à fonctionner tant que la sonde de température 26 indique un écart de température avec l'indication de la sonde 22 de la cuve 2, compte tenu des pertes normales inévitables. Donc, à l'arrêt de la pompe 9, on est assuré que la température de l'eau dans l'enceinte 1.1 est égale à celle de la cuve 2.

Il apparaît qu'avec l'installation de la Fig. 2, à chaque remplissage d'une enceinte, la température de l'eau ou du bouillon dans cette dernière est particulièrement bien définie, ce qui permet d'évaluer avec précision, le temps de chaque cycle.

Bien entendu toutes les vannes des installations des Figs. 1 et 3 sont commandées et contrôlées par le circuit de commande 4.

Des expériences de cuisson effectuées dans une installation du type de celui de la Fig. 3 ont montré que la période pendant laquelle la pompe 9 continue à fonctionner une fois que la cuve concernée est pleine pouvait, avec avantage, être prolongée au-delà du moment où la sonde de température 26 indique un écart de température pratiquement nul avec l'indication de la sonde 22 de la cuve 2. Ainsi, la période de chauffe peut aller jusqu'à 3/4 d'heure pour le premier cycle, et 1/2 heure pour les deux cycles suivants, l'intervalle de temps entre les cycles de chauffe étant de 2,5 à 4 heures environ.

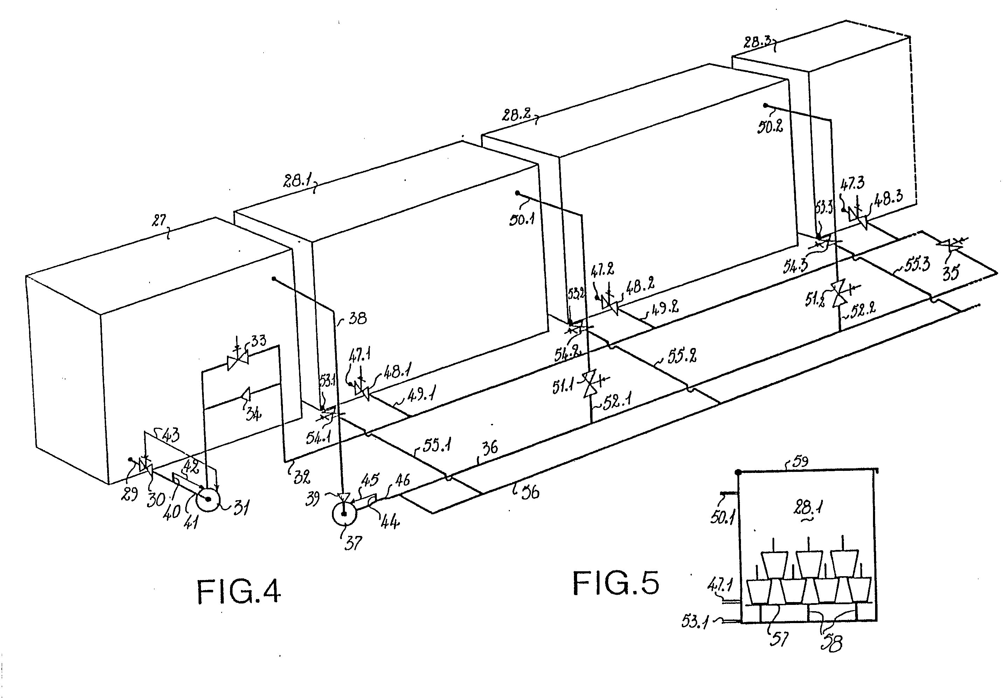

A la Fig. 4, on a montré schématiquement en perspective une variante de l'installation de la Fig. 3. Cette installation comprend une cuve 27, fonctionnant en contrale de chauffe analoque à la cuve 2, et des enceintes de cuisson 28.1 à 28.3, analogues aux enceintes 1.1 à 1.n. La cuve 27 comporte un tuyau de sortie 29 débouchant dans a partie inférieure. Le tuyau 29 est relié à l'entrée d'une électrovanne 30 dont la sortie est reliée à l'admission d'une pompe 31. Le côté refoulement de la pompe 31 est reliée à une canalisation de distribution 32 par l'intermédiaire d'une électrovanne 33. En parallèle sur l'électrovanne 33, est monté un limiteur de débit 34.

Le canalisation de distribution 32 est reliée à l'entrée d'une électrovanne 35 sont la sortie est reliée à une canalisation de retour 36. La canalisation 36 est reliée au côté admission d'une pompe 37 dont le côté refoulement est reliée à un tuyau de retour 38 qui débouche en un point haut de la cuve 27. Sur le tuyau 38, le plus près possible de la pompe 37, est monté un clapet anti-retour 39.

A la pompe 31, est associé un détecteur de liquide ou aquastat 40 qui est monté sur le tuyau 41 reliant l'électrovanne 30 à la pompe 31. L'aquastat 40 commande, par la liaison électrique 42, l'arrêt de la pompe 31 dès qu'il ne détecte plus d'eau dans le tuyau 41. La mise en fonctionnement de la pompe 31 est déclenché par l'ouverture de l'électrovanne 30, par la liaison électrique 43.

A la pompe 37 est associé un aquastat 44 qui commande, par la liaison électrique 45, la mise en fonctionnement de la pompe 37 quand il détecte du liquide dans le bout adjacent de la canalisation 36. A la Fig. 4, on a prévu que l'aquastat 44 est monté sur le point haut d'un coude 46 de la canalisation 36. On en verra la raison quand on décrira le fonctionnement de l'installation de la Fig. 4. Le coude 46 est convexe vers le haut.

L'enceinte 28.1 comporte un tuyau d'entrée 47.1 qui débouche dans sa partie basse et qui est reliée à la sortie d'une électrovanne 48.1 dont l'entrée est reliée à une dérivation 49.1 de la canalisation de distribution 32. Elle comporte encore un tuyau de déversement de tropplein 50.1 qui débouche dans sa partie haute et qui est reliée à l'entrée d'une électrovanne 51.1 dont la sortie est reliée à une dérivation 52.1 de la canalisation de retour 36. Enfin, la vuve 28.1 comporte une sortie de vidange 53.1, situé en sont point le plus bas, qui est reliée à l'entrée d'une électrovanne 54.1 dont la sortie est reliée par une dérivation 55.1 d'une canalisation de vidange 56.

Les enceintes 28.2 et 28.3, ainsi qu'éventuellement d'autres enceintes non montrées, comporte des tuyaux identiques reliés à des éléments identique qui portent les références 47.2 à 55.2, 47.3 à 55.3, etc.

Le fonctionnement de l'installation de la Fig. 4 est le suivant:

Remplissage d'une enceinte, par ex. 28.1

Les électrovannes communes 30 et 33 sont ouvertes, la vanne commune 35 est fermée, les vannes individuelles 48.1 et 51.1 sont ouvertes, 48.2, 51.2, 48.3 et 51.3 étant fermées. Le bouillon s'écoulant de 27 par gravité à travers 30, la vanne 30 a mis la pompe 31 en fonctionnement si bien que le bouillon est envoyé par 33, 32, 49.1, 48.1 et 47.1 dans l'enceinte 28.1. Au bout d'un certain temps, l'enceinte 28.1 est pleine et le trop-plein s'écoule par 50.1, 51.1, 52.1 et 36, si bien que l'aquastat 44 détecte la présence de liquide et déclenche le fonctionnement de la pompe 37 qui refoule le bouillon pompé par 39 et 38 dans la cuve 37.

Prolongation de la circulation dans l'enceinte

Le temps de remplissage d'une enceinte est en pratique connu, si bien qu'au bout d'un temps prédéterminé, l'électrovanne 33 est fermée si bien que le bouillon refoulé ne passe plus que par le limiteur de débit 34. Cet arrangement permet de limiter le débit dans l'enceinte 28.1, c'est à dire les remous inutiles. Le débit de 34 est choisi de manière à assurer une circulation calme dans l'enceinte 21.8.

Vidage de l'enceinte

A la fin de la période de circulation, la vanne commune 30 est fermée et la vanne commune 35 est ouverte, tandis que la vanne 51.1 est fermée, la vanne 48.1 restant ouverte. Le bouillon présent dans l'enceinte 28.1 s'écoule par 47.1, 48.1, 49.1, 32, 35 et 36, si bien que l'aquastat 44 continue à faire fonctionner la pompe 37 qui refoule le contenu liquide de l'enceinte 28.1 dans la cuve 27.

Comme on l'a dit plus haut, l'intervalle de temps entre deux cycles de chauffe étant de 3 à 4 heures, et le temps de circulation, plus remplissage, étant au maximum de 3/4 d'heure, on peut avec une seule cuve de chauffe alimenter 4 à 5 enceintes de cuisson, qui sont, de préférence, les plus grandes possibles.

La programmation des différentes opérations: remplissage circulation, vidage, et leurs affectations décalées dans le temps aux différentes enceintes de cuisson conviennent particulièrement à l'utilisation d'un automate.

Comme le montre la Fig. 5, pour des facilités de manutention, les moules à jambon (ou les clayettes) sont empilés sur un plateau 57 muni de pieds 58 permettant de transporter les plateaux au moyen de transporteurs à fourche. Il en résulte que, sous le niveau du plateau 57, il reste un volume qui se remplit d'eau. En pratique, la tubulure 47.1 est positionnée légèrement au-dessus du niveau de 57. Il en résulte qu'après le vidage exécuté comme décrit ci-dessus, de l'eau chaude reste au fond de l'enceinte. Il a été constaté que cette eau, aux environs de 85°C constituait avantageusement une source de chaleur entre deux cycles de chauffe.

A la fin de la période de longueur prédéterminée suivant le dernier cycle de chauffe, d'une part, le couvercle 59 est ouvert pour arrêter la cuisson et, d'autre part, la vanne de vidange 54.1 est ouverte, le bouillon étant pompé dans 27 par 37. Ainsi, le bouillon non utilisé se trouve toujours dans la cuve 27 où il est facile de le maintenir à une température suffissamment élevée pour qu'il ne se dégrade pas.

Le clapet 39 est prévu pout éviter que la colonne d'eau de 38 qui le surmonte ne retombe périodiquement réexciter le fonctionnement de la pompe 37. Le coude 46 permet de placer l'aquastat dans un point haut et éviter aussi un fonctionnement oscillant de la pompe 37.

Dans la pratique, au lieu d'utiliser l'aquastat 44 pour déclencher et arrêter le fonctionnement de la pompe 37, on peut prévoir des sondes de niveaux haut et bas dans les enceintes.

Enfin, des vannes de vidange sont prévues dans tous les points bas de l'installation.

## Revendications

1. Procédé de cuisson de jambons, par transfert de chaleur par convection et conduction entre un liquide caloporteur et les jambons et leurs supports, caractérisé en ce qu'il comporte plusieurs cycles, au cours de chacun desquels le liquide caloporteur est mis en contact avec les jambons et leurs supports (15) pendant une fraction relativement courte du cycle, puis retiré du contact ave les jambons pendant le reste du cycle, et en ce que le support des jambons est constitué par un moule comportant un couvercle, lesdits moule et couvercle étant en un matériau présentant une bonne chaleur spécifique de manière à pouvoir emmagasiner rapidement une quantité de chaleur importante cédée lentement au jambon pendant ledit reste du cycle durant lequel le liquide caloporteur est retiré, la température du liquide caloporteur étant supérieure à a température à coeur de fin de cuisson des jambons.

2. Procédé suivant la revendication 1, caractérisé en ce que l'intervalle entre cycles de chauffe est de 2,5 à 4 heures, le liquide caloporteur étant en contact avec les jambons et leurs supports pendant 3/4 d'heure dans le premier cycle et 1/2 heure dans les cycles suivants.

3. Procédé suivant la revendication 2, caractérisé en ce que la température du liquide au cours du premier cycle est de 85°C.

4. Procédé suivant l'une des revendications 1 à 3, caractérisé en ce que, pendant chaque période de cycle où le liquide caloporteur est retiré du contact avec les jambons, une partie du liquide caloporteur est laissé au fond de l'enceinte de cuisson, sous les jambons.

5. Procédé suivant l'une des revendications 1 à 4, caractérisé en ce qu'il est mis en oeuvre en utilisant plusieurs enceintes de cuisson dont les cycles sont décalés et le liquide caloporteur circulant successivement dans lesdites enceintes.

## Patentansprüche

1. Verfahren zum Kochen von Schinken durch Wärmeübertragung mittels Konvektion und Konduktion von einer Heizflüssigkeit auf die Schinken und ihre Behälter, dadurch gekennzeichnet, daß es aus mehreren Zyklen besteht und während jedes Zyklus die Heizflüssigkeit in Kontakt mit den Schinken und ihren Behältern (15) über einen relativ kurzen Teil des Zyklus gebracht wird, daß dann für den Rest des Zyklus der Kontakt mit den Schinken unterbrochen wird, daß die Behälter für die Schinken aus einem Topf mit einem Deckel bestehen, und daß der Topf und der Deckel aus einem Material mit hoher spezifischer Wärme bestehen, so daß sie in der Lage sind, schnell eine beträchtliche Wärmemenge zu speichern, die währen des Resters des Zyklus nach dem Entfernen der Heizflüssigkeit langsam auf den Schinken übertragen wird, und daß die Temperatur der Heizflüssigkeit höher ist als die Kochendtemperatur im Kern der Schinken.

2. Verfahren nach Anspruch 1, dadurch gekennzeichnet, daß die Zeitspanne zwischen den Heizzyklen 2,5 bis 4 Stunden beträgt und daß die Heizflüssigkeit im ersten Zyklus 3/3 Std. lang und in den folgenden Zyklen jeweils 1/2 Std. lang in Kontakt mit den Schinken und ihren Behältern gebracht wird.

3. Verfahren nach Anspruch 2, dadurch gekennzeichnet, daß die Temperatur der Heizflüssigkeit im ersten Zyklus 85°C beträgt.

4. Verfahren nach einem der Ansprüche 1—3, dadurch gekennzeichnet, daß während jeder Periode des Zyklus, während welcher die Heizflüssigkeit keinen Kontakt mit den Schinken hat, ein Teil der Heizflüssigkeit am Boden des Kochbehälters unter den Schinken belassen wird.

5. Verfahren nach einem der Ansprüche 1—4, dadurch gekennzeichnet, daß es ausgeführt wird unter Verwendung mehrere Kochbehälter, in welchem die Zyklen entsprechend verschoben werden, und daß die Heizflüssigkeit sukzessive durch diese Kochbehälter fließt.

## Claims

1. A method for cooking hams, through transfer of heat by convection and conduction from heating liquid, to the hams and supports thereof, characterized in that it is comprised of several steps, during each step the heating liquid being placed in contact with the hams and supports (15) thereof during a substantially short period of time, then removed for the rest of the step, and in that the ham supports are comprised of moulds including lids, said moulds and lids being ade of material having such a high specific heat as to be able to quickly store an important amount of heat to be slowly transferred to the hams during said rest of the step once the heating liquid has been removed, the temperature of the heating liquid being higher than the cooking end temperature at the core of the hams.

2. A method according to claim 1, characterized in that the period separating heat steps is from 2,5 to 4 hours, the heating liquid being placed in contact with the hams and the supports thereof during three quarters of an hour for the first step and during half an hour for each of the following steps.

3. A method according to claim 2, characterized in that the temperature of the heating liquid is of 85°C for the first step.

4. A method according to one of the claims 1—3, characterized in that, during the period of each step once the heating liquid has been removed from contacting the hams, a part of the heating liquid is kept at the bottom of the cooking box, under the hams.

5. A method according to one of the claims 1—4, characterized in that it is implemented by using several cooking boxes wherein the steps are respectively shifted, the heating liquid flowing sequentially in said boxes.

FIG.1

0 070 228

FIG.2

FIG.3

FIG.4

FIG.5

0 070 228